# EUROPEAN PATENT SPECIFICATION

(11) **EP 0 563 050 B1**
(45) Date of publication and mention of the grant of the patent: **04.09.1996**
(21) Application number: 91918706.2
(22) Date of filing: 18.10.1991
(51) Int. Cl.: G09B 19/02

(54) **DIDACTIC TOY**
LEHRSPIEL
JOUET DIDACTIQUE

(43) Date of publication of application: 06.10.1993
(73) Proprietor: DAVILA MURILLO, Juan Jorge, E-06430 Zalamea de la Serena (ES)
(72) Inventor: DAVILA MURILLO, Juan Jorge, E-06430 Zalamea de la Serena (ES)
(74) Representative: Garcia Cabrerizo, Francisco
(86) International application number: ES9100069
(87) International publication number: WO9300667

(56) References cited:
- FR-A- 1 595 518
- FR-A- 2 040 730
- FR-A- 2 129 395
- US-A- 3 803 581
- US-A- 3 834 042

## Description

The object of the invention is a didactic toy.

There is a large number of didactic toys available nowadays and also there is a large number of such toys whose life has proved ephemeral either because they have become old-fashioned or they have ceased to be practical and useful to the player who is generally a child. Children are very special users since they can immediately detect and show through their preference for the toy whether it is competitive and appealing or not.

The invented toy which is simple in its conception and easy to use is essentially designed so that children can learn the multiplication table which is very difficult task for the teacher and most of the times is tiresome for the student. It is obvious that the invented toy itself is most interesting from the educational point of view since children can use it both at home and school for the supporting and reinforcing activities in his learning. Therefore this is a didactic toy intended to facilitate the acquisition of the automatisms required to learn multiplication.

FR-A-2,129,395 discloses a didactic toy having the features defined in the preamble of claim 1.

However, this known didactic toy includes a multiplication table and another table relating to possible results so arranged as it is necessary to associate each product indicated in the multiplication table with its result in the other table, that is to say, that to check the table of a given factor, it shall then be necessary to move ten times both mobile terminals or test points, one time in respect of each one of the products shown where said factor is present.

The present invention has for purpose to eliminate the above drawback of the known didactic toy.

To this respect, the didactic toy according to the invention includes all the features defined in claim 1. Thus, if the proposed solution is not correct, then the normally-open electric circuit will not be closed and logically nothing will happen. If otherwise, then it will be closed enabling a sound and/or light indicator.

Its usefulness is varied. On the one hand, it permits to find out whether the result from a multiplication is the scheduled result while on the other hand, it permits to quickly find out such result in case of not even remotely suspecting which it might be. Likewise it can be used for checking some properties of multiplication such as the commutative property.

By extension, the toy can he applied to any kind of learning which might be derived from a data table assimilable to those of multiplication.

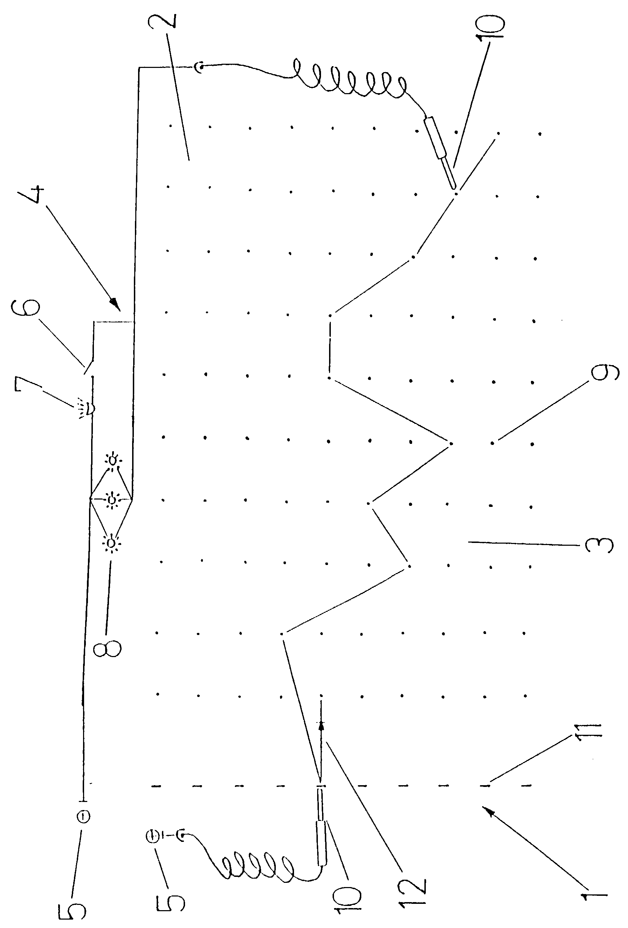

In order to facilitate the understanding of not only the structure but also the use itself of the toy, a practical performance example is given below with such performance being merely enunciative and in no case limitative of the same, all this being as shown in the attached drawing. Such drawing shows the didactic toy (1) as defined by a cover (2) showing a double-entry table (3) containing numbers smaller than ten including zero with such entries both horizontally and vertically arranged.

The toy is composed of a normally-open electric circuit (4) provided with electric batteries (5), a switch (6) intended for a buzzer (7) and a light indicator (8) as well as electric contacts (9). The circuit is closed on bridging by means of end pins (10) one of the contacts (11) of the numbers heading rows which show the result of multiplying it by another number from those heading the columns for which purpose there is an elementary circuit available for each of the former numbers.

In addition, since zero makes null the product of any other factor multiplied by zero, then obviously the product numbers located in the zeros column are bound to be zeros and on choosing any of them as the answer to a multiplication by zero, the toy will acknowledge such answer as correct, and in order to make it possible, all the zeros in the above-mentioned column are interconnected. However this poses a technical problem, namely that all the above mentioned elementary circuits remain in turn interconnected through the first column, ie the zeros column.

The problem was solved by inserting a diode (12) between the contact of each number heading the rows and the closer zero in the zeros column.

The drawing referred to shows a practical performance example of the pin arrangement for the correct calculation of 4 x 8. It is obvious that the carcass giving shape to this toy may be of vaious shapes and sizes, though this does not involve a deviation from the scope of the invention as defined by the appended claims.

After describing in enough detail the nature of the invention as well as the way to carry it out in practise, it is worth noting that the above arrangements as shown in the attached drawings are liable to undergo alterations provided that such alterations does not change its fundamental principle as defined by the appended claims.

## Claims

1. Didactic toy intended to facilitate learning arithmetical operations such as the multiplication table, including a double entry board (3) having a plurality of electric contacts (9, 11) which are arranged into rows and columns and mutually connected according to a predetermined electrical diagram and a normally-open electric circuit (4), the normally-open electric circuit (4) becoming closed to operate an indicator means (7, 8) when two contacts (9, 11) relating to an exact result of multiplication of two numbers are interconnected,
characterized in that the double-entry board (3) includes numbers smaller that ten which are shown in increasing order both horizontally and vertically, the numbers horizontally arranged being headings of columns under which their first ten multiples, to which are associated electric contacts (9), respectively, are shown while those vertically arranged are the headings of rows showing numbers which are not related either with them or each other with the products of multiplication which are out of order within each column and placed at random in each column, and in that the normally-open electric circuit (4) is closed only when one of the numbers smaller than ten is correctly bridged with the result obtained from multiplying it by another number also smaller than ten.

2. Didactic toy according to claim 1, characterized in that the numbers smaller than ten include zero and a diode (12) is inserted between the contact of each number heading the rows and the closer zero in the zero column.

3. Didactic toy according to claim 1 or 2, characterized in that said indicator means (7, 8) is a buzzer (7) or a light indicator (8).

4. Didactic toy according to any preceding claims, characterized in that it comprises two pins (10) intended to close the normally-open circuit (4) when electrically contacting a row contact and a column contact, respectively, corresponding to a correct result from a multiplication.

## Patentansprüche

1. Didaktisches Spielzeug konzipiert zwecks Rechnenoperationenlernens, wie z.B. Multipliziertafel, zu erleichtern, wobei eine Doppelteingabeplatte (3) mit einer in Reihen und Spalten angeordnete mehrzahl von elktrischen Kontakten die gegenseitig und gemäß vorbestimmten elektrischen Diagrammen angeschloßen sind, eingefügt wird, und mit einer normalerweise geöffnete Schaltung (4); wobei diese normalerweise geöffnete Schaltung (4) Schließfähig ist, um als Anzeigemittel (7, 8) funktionieren zu können wenn sich zwei Kontakte (9, 11), die mit dem genauen Ergebnis der Multiplikation zweier in Beziehung stehende Zahlen anschließen, dadurch gekennzeichnet, daß Zahlen kleiner als Zehn auf der Doppelteingabeplatte (3) eingefügt sind die sich in zunehmende Ordnung, sowohl in waagerechte als in senkrechte Richtung, zeigen; daß die horizontal angeordnete Zahlen Spaltenköpfe sind, unter den ihre ersten Zehn Vielfaches sich zeigen, wobei zu diesen gegenseitigen elektrische Kontakte (9) in Verbindung stehen, während die vertikal angeordnete Zahlen die Reiheköpfe sind, und die Zahlen die weder mit diesen noch untereinander in Bezug mit den Multipliahlenkationergebnisse zeigen, die sich ausser Ordnung und aleatorisch, in und längs jeder Spalte befinden, und daß die elektrische Schaltung normalerweise geöffnet (4) nur geschloßen ist wenn sich eine der Zahlen kleiner als Zehn richtig überbrückt mit dem erhaltenen Ergebnis aus Multiplikation mit andere Zahl kleiner als Zehn befindet.

2. Didaktisches Spielzeug nach Anspruch 1 dadurch gekennzeichnet, daß die Zahlen unter Zehn die Null einfügen, und eine Diode (12) zwischen dem Kontakt je auf dem Kopf der Reihen stehende Zahl und der nähere Null an die Nullspalte, eingefügt wird.

3. Didaktisches Spielzeug nach Ansprüche 1 und 2, dadurch gekennzeichnet, daß dieses Anzeigemittel (7, 8) ein Summer (7) oder ein Leuchtanzeiger (8) ist.

4. Didaktisches Spielzeug nach einer der vorstehenden Ansprüche, dadurch gekennzeichnet daß es aus zwei Anschlußpins (10) besteht die zum Schließen der normalerweise geöffnete Schaltung (4) konzipiert sind, wenn, bzw., je ein Reihes- und ein Spaltekontakt, entsprechend dem genauen Ergebnis einer Multiplikation in Beruhrung tretten.

## Revendications

1. Jouet pédagogique conçu pour faciliter l'apprentissage d'opérations arithmétiques comme, par exemple, la table de multiplication, comprenant une plaque à double introduction (3) avec un certain nombre de contacts électriques (9,11) disposés en rangées et en colonnes et branchés mutuellement d'après des diagrammes électriques préalablement déterminés, et avec un circuit électrique normalement ouvert (4), ledit circuit électrique normalement ouvert (4) avec capacité de fermeture pour pouvoir fonctionner comme moyen indicateur (7,8) quand s'interconnectent deux contacts (9,11) liés au résultat exact de la multiplication de deux nombres, caractérisé par le fait que la plaque à double introduction (3) comprend des nombres inférieurs à dix que l'on représente en ordre croissant aussi bien horizontalement que verticalement, les nombres disposés horizontalement sont des têtes de colonnes sous lesquelles on représente leurs dix premiers multiples, par rapport auxquels il y a des contacts électriques (9) respectivement associés, tandis que ceux qui sont disposés verticalement sont les têtes de rangées représentant des nombres non reliés avec ceux-ci, ni entre eux avec les produits de multiplication qui se trouvent hors de l'ordre dans chaque colonne et situés de façon aléatoire le long de chaque colonne et dans lequel le circuit électrique normalement ouvert (4) est fermé seulement quand un des nombres inférieurs à dix est correctement ponté avec le résultat obtenu par la multiplication par un autre numéro également inférieur à dix.

2. Jouet pédagogique d'après la revendication 1, caractérisé par le fait que les nombres inférieurs à dix incluent le zéro et que l'on insère un diode (12) entre le contact de chaque nombre à la tête des rangées et le zéro le plus proche de la colonne zéro.

3. Jouet pédagogique d'après les revendications 1 et 2, caractérisé par le fait que ledit moyen indicateur (7,8) est un vibreur (7) ou un indicateur lumineux (8).

4. Jouet pédagogique d'après n'importe laquelle des revendications précédentes, caractérisé par le fait qu'il comprend deux broches (10) conçues pour fermer le circuit normalement ouvert (4) quand ils entrent respectivement en contact avec un contact de rangée et un de colonne, correspondant au résultat correct d'une multiplication.
